# EUROPEAN PATENT SPECIFICATION

(11) **EP 3 629 857 B1**
(45) Date of publication and mention of the grant of the patent: **25.06.2025**
(21) Application number: 18728136.5
(22) Date of filing: 30.05.2018
(51) Int. Cl.: A47J 31/44, A47J 31/36

(54) **BEVERAGE MACHINE WITH A STORABLE DISPENSING HEAD**
GETRÄNKEMASCHINE MIT LAGERBAREM AUSGABEKOPF
DISTRIBUTEUR DE BOISSONS AYANT UNE TÊTE DE DISTRIBUTION STOCKABLE

(30) Priority: 01.06.2017 EP 17173882
(43) Date of publication of application: 08.04.2020
(73) Proprietor: Société des Produits Nestlé S.A., 1800 Vevey (CH)
(72) Inventor: BYUN, Da, Mi, 1007 Lausanne (CH); GUYON, Bertrand, 25160 Saint Point Lac (FR); MAGATTI, Marco, 1010 Lausanne (CH); MEYER, Eric, 1009 Pully (CH); OBLIGER, Nicolas, 25170 Franey (FR)
(74) Representative: Schnyder, Frank Simon
(86) International application number: PCT/EP2018/064141
(87) International publication number: WO 2018/219985

(56) References cited:
- WO-A1-2011/086087
- WO-A1-2012/072767
- WO-A1-2017/037212
- WO-A1-2017/037215
- WO-A1-2018/046400

## Description

### Field of the Invention

The field of the invention pertains to beverage preparation machines provided with a storable dispensing head, e.g. machines using capsules of an ingredient of the beverage to be prepared.

For the purpose of the present description, a "beverage" is meant to include any human-consumable liquid substance, such as tea, coffee, hot or cold chocolate, milk, soup, baby food, etc... A "capsule" is meant to include any pre-portioned beverage ingredient, such as a flavouring ingredient, within an enclosing packaging of any material, in particular an airtight packaging, e.g. plastic, aluminium, recyclable and/or biodegradable packagings, and of any shape and structure, including soft pods or rigid cartridges containing the ingredient. The capsule may contain an amount of ingredient for preparing a single beverage portion or a plurality of beverage portions.

### Background Art

Certain beverage preparation machines use capsules containing ingredients to be extracted or to be dissolved and/or ingredients that are stored and dosed automatically in the machine or else are added at the time of preparation of the drink. Some beverage machines possess filling means that include a pump for liquid, usually water, which pumps the liquid from a source of water that is cold or indeed heated through heating means, e.g. a thermoblock or the like.

Especially in the field of coffee preparation, machines have been widely developed in which a capsule containing beverage ingredients is inserted in a brewing device. The brewing device is tightly closed about the capsule, water is injected at the first face of the capsule, the beverage is produced in the closed volume of the capsule and a brewed beverage can be drained from a second face of the capsule and collected into a receptacle such as a cup or glass.

It is also known to make portable machines for preparing beverage, for instance as disclosed in US 6,739,241, WO 99/02081, WO 2006/102980, US 2007/0199452, WO 2009/092746, EP 1 686 879 and WO 2011/131595.

Brewing devices have been developed to facilitate insertion of a "fresh" capsule and removal of the capsule upon use. Typically, the brewing devices comprise two parts relatively movable from a configuration for inserting/removing a capsule to a configuration for brewing the ingredient in the capsule. The actuation of the movable part of the brewing device may be manual as disclosed in WO 2009/043630, WO 01/15581, WO 02/43541, WO 2010/015427, WO 2010/128109, WO 2011/144719 and WO 2012/032019. Various handle configurations are disclosed in EP 1867260, WO 2005/004683, WO WO2007/135136, WO 2008/138710, WO 2009/074550, WO 2009/074553, WO 2009/074555, WO 2009/074557, WO 2009/074559, WO 2010/037806, WO 2011/042400, WO 2011/042401 and WO 2011/144720. Integrations of such arrangements into beverage machines are disclosed in WO 2009/074550, WO2011/144719, EP2014195046, EP2014195048 and EP2014195067.

The actuation of the movable part of the brewing device may be motorized. Such a system is for example disclosed in WO 2012/025258, WO 2012/025259, WO 2013/127476 and EP 1 767 129. In this latter disclosure, the brewing device has a capsule insertion passage provided with a safety door assembled to the movable part of the brewing device via a switch for detecting an undesired presence of a finger in the passage during closure. Alternative covers for a capsule insertion passage are disclosed WO 2012/093107 and WO 2013/127906.

For allowing the user to interact with such machines, for providing operation instructions to the machine or obtaining feed-back therefrom, various systems have been disclosed in the art, for instance as mentioned in the following references: AT 410 377, CH 682 798, DE 44 29 353, DE 202 00 419, DE 20 2006 019 039, DE 2007 008 590, EP 1 448 084, EP 1 676 509, EP 08155851.2, FR 2 624 844, GB 2 397 510, US 4,377,049, US 4,458,735, US 4,554,419, US 4,767,632, US 4,954,697, US 5,312,020, US 5,335,705, US 5,372,061, US 5,375,508, US 5,645,230, US 5,685,435, US 5,731,981, US 5,836,236, US 5,959,869, US 6,182,555, US 6,354,341, US 6,759,072, US 2007/0157820, WO 97/25634, WO99/50172, WO 2004/030435, WO 2004/030438, WO 2006/063645, WO 2006/090183, WO 2007/003062, WO 2007/003990, WO 2008/104751, WO 2008/138710, WO 2008/138820, WO 2010/003932, WO 2011/144720 and WO 2012/032019.

WO 2007/141334 and WO 2008/006682 disclose a beverage dispensing machine with a beverage preparation module that is movable relative to a base station.

WO 2006/050881 discloses a milk frother that has a dispensing head for dispensing the frother milk. The dispensing head is retractable inside the forther's housing for the time needed at the end of a dispensing cycle to perform a cleaning cycle of the dispensing head. WO 2009/043630 and PCT/EP16/070680 disclose a beverage machine with a dispensing head that is movable into and out of the machine's external casing. PCT/EP16/070685 discloses a beverage machine with a user-interface that is movable into and out of the machine's external casing.

WO 2017/037212 A1 discloses a machine for preparing and dispensing a beverage comprising: - a main body containing a unit for preparing said beverage to be dispensed via an outlet to an external user-recipient at a user-recipient placement location; - a beverage dispensing head that includes the outlet and that is movable relative to the main body inwards into the main body into a retracted head position and outwards from the main body into a deployed head position; and - a control unit for controlling the preparation unit to supply said beverage to the outlet. The control unit is configured to: - maintain or leave the beverage dispensing head in its retracted position when the beverage preparation unit is not operated to process a liquid; and/or - move the beverage dispensing head into its deployed position or maintain or leave it in this position only when the control unit operates the preparation unit to process a liquid for dispensing via the outlet.

### Summary of the Invention

The claimed invention relates to a machine for preparing a beverage according to claim 1. Further optional features are disclosed in the dependent claims 2-15. The beverage preparation machine can be an in-home or out of home machine. The machine may be for the preparation of coffee, tea, chocolate, cacao, milk, soup, baby food, etc...

The beverage preparation typically includes the mixing of a plurality of beverage ingredients, e.g. water and milk powder, and/or the infusion of a beverage ingredient, such as an infusion of ground coffee or tea with water. One or more of such ingredients may be supplied in loose and/or agglomerate powder form and/or in liquid form, in particular in a concentrate form. A carrier or diluents liquid, e.g. water, may be mixed with such ingredient to form the beverage. Typically, a predetermined amount of beverage is formed and dispensed on user-request, which corresponds to a portion (e.g. a serving). The volume of such portion may be in the range of 25 to 200 ml and even up to 300 or 400 ml, e.g. the volume for filling a cup, depending on the type of beverage. Formed and dispensed beverages may be selected from ristrettos, espressos, lungos, cappuccinos, latte macchiato, café latte, americano coffees, teas, etc... For instance, a coffee machine may be configured for dispensing espressos, e.g. an adjustable volume of 20 to 60 ml per portion, and/or for dispensing lungos, e.g. a volume in the range of 70 to 150 ml per portion.

The machine of the invention has an outside housing with one or more outside faces, such as one or more faces selected from a top face, a side face, a rear face and a front face.

The machine includes a dispensing head that has a beverage outlet and that is movable: outwards out of the outside housing into a deployed operative position in which a beverage is dispensible via the outlet to a beverage dispensing surface for positioning a user-cup or user-mug; and inwards into the outside housing into a retracted storage position.

The dispensing surface can be formed by any suitable recipient support. Examples of suitable recipient supports are disclosed in EP 0 549 887, EP 1 440 639, EP 1 731 065, EP 1 867 260, US 5,161,455, US 5,353,692, WO 2009/074557, WO 2009/074559, WO 2009/135869, WO 2011/154492, WO 2012/007313, WO 2013/186339, EP 2014198712, EP 2014198710 and EP 2014198715.

The outlet may be confined within the outside housing in the storage position.

The dispensing head may be surrounded by outside faces of the outside housing that are generally flush with apparent faces of the dispensing head in the storage position.

The machine incorporates a liquid circuit for processing the beverage and delivering such beverage into the beverage outlet. The liquid circuit has at least one activatable unit that is passed through by liquid during beverage preparation. The activatable unit(s) may be selected from: a liquid driver; a thermal conditioner; and an ingredient processing unit.

The thermal conditioner may be a boiler or a thermoblock or an on demand heater (ODH), for instance an ODH type disclosed in EP 1 253 844, EP 1 380 243 and EP 1 809 151.

Examples of liquid drivers e.g. pumps and their incorporation into beverage machines are disclosed in WO 2009/150030, WO 2010/108700, WO 2011/107574 and WO 2013/098173.

The liquid circuit can include one or more liquid ducts for guiding liquid to be delivered by the outlet.

The dispensing head is configured so that it can be maintained in: the deployed operative position whether the activatable unit(s) is/are activated or maintained activated or deactivated or maintained deactivated; and/or the retracted storage position whether the activatable unit(s) is/are activated or maintained activated or deactivated or maintained deactivated.

The machine can have a deployed configuration for use (preparing and dispensing beverage) and a compacted configuration for storage (e.g. non-use and/or displacement of the machine).

The dispensing head may be secured in its deployed and/or its retracted positions such that it remains immobile in the machine under the effect of its own weight when exposed to gravity in any orientation of the machine.

The dispensing head may be configured to be movable manually by a user from the deployed operative position to the retracted storage position and/or vice versa. For instance, such machine has a power unit comprising a main switch that is directly or indirectly actuated by the dispensing head when moved between the deployed operative and the retracted storage positions.

The dispensing head may be configured to be movable automatically, e.g. by a motor and/or an automatic return-spring, from the deployed operative position to the retracted storage position and/or vice versa. For instance, the dispensing head is moved into its deployed operative position when such machine is powered and/or is moved into its retracted storage position when a powering of such machine is interrupted.

The dispensing head can be maintained in its deployed operative position and/or in its retracted storage position by at least one of: a friction and/or magnetic force, clipping arrangement and locking arrangement.

The dispensing head may be guided from its deployed operative position into its retracted storage position and vice versa by a cam-follower and cam arrangement.

The dispensing head includes the ingredient processing unit that has an ingredient holder forming an ingredient seat, e.g. a seat in which ingredients are mixed.

For instance, the ingredient processing unit has a first module and a second module that are movable relatively to each other by an actuator between: a distant configuration for inserting into the seat and/or removing from the seat, e.g. towards a waste ingredient collector, an ingredient, e.g. a flavouring ingredient supplied within a capsule into the seat optionally via an ingredient supply channel; and a proximate configuration for processing the ingredient in the seat.

Examples of suitable waste ingredient collectors for carrying out the present invention are disclosed in EP 1867260, WO 2009/074559, WO 2009/135869, WO 2010/128109, WO 2011/086087 and WO 2011/086088.

The first and second modules movable relatively to each other may be part of a mixing unit.

Examples of suitable mixing unit with first and second modules that are relatively moved by a motor are disclosed in EP 1767129, WO 2012/025258, WO 2012/025259, WO 2013/127476 and WO 2014/056641. The first module and the second module of the mixing unit can be relatively movable generally along a longitudinal straight axis. Typically, the first and second modules of the mixing module are distant from each other in the transfer position and close to each other in the mixing position. In the mixing position, the first and second modules may define a mixing chamber, e.g. a chamber for receiving a plurality of beverage ingredients to be mixed together. In one embodiment, the mixing chamber is an infusion chamber in which infusible ingredients, e.g. coffee or tea, are exposed to a carrier liquid, such as water e.g. hot water. The mixing chamber may be configured to receive loose solid ingredient particles and/or to receive proportioned ingredients within a capsule. At least one part of the first and second modules may delimit a cavity for receiving the ingredient e.g. within a capsule, such as a tapered cavity, e.g. a conical or pyramidal cavity, or a straight cavity, e.g. a cylindrical or trapezoidal cavity. Such cavity may extend along an axis that is generally collinear with the above longitudinal straight axis. The other part of these first and second parts may include an extraction plate, such as a plate provided with piercing elements for opening a flow-through face of the capsule or a non-intrusive plate for cooperating with a pre-opened or a self-opening flow-through face of the capsule. Self-opening capsules are for instance disclosed in CH 605 293 and WO 03/059778. The opening of capsules by a machine's piercing elements of a plate are for example disclosed in EP 512 470 and EP 2 068 684. Examples of suitable mixing modules with mixing chambers are disclosed in WO 2008/037642 and WO 2013/026843. A flavoured beverage may be prepared by circulating (by means of a liquid driver, e.g. a pump) a carrier liquid, such as water, into the capsule to flavour the liquid by exposure to a flavouring ingredient held in the capsule, e.g. along an extraction direction that may be generally parallel to the direction of relative movement of the first and second modules of the mixing units. When closed capsules are used, the first and second modules may include a capsule opener such as blades and/or a tearing tool, e.g. a plate with a tearing profile, for instance as known from Nespresso^{™} machines or as disclosed in EP 0 512 470, EP 2 068 684 and WO 2014/076041 and the references cited therein. The interaction between the first and second modules (and optionally a capsule transfer channel) and an ingredient capsule may be of the type disclosed in WO 2005/004683, WO 2007/135135, WO2007/135136, WO 2008/037642 and WO 2013/026856. The machine may include a capsule loader associated with the transfer channel for loading a capsule. The capsule to be loaded may be of the type described above under the title "Field of the Invention" and/or the capsule may include an ingredient described under the same title. The capsule can comprise a capsule body, e.g. a generally straight or tapered body. The capsule can have a circular peripheral annulus flange, e.g. a flexible or rigid flange, extending from a peripheral part, e.g. an edge or face, of the capsule body. The capsule may contain a flavoring ingredient for preparing tea, coffee, hot chocolate, cold chocolate, milk, soup or baby food. The capsule loader may have: a capsule holding configuration for holding an ingredient capsule away from the mixing unit; and a capsule releasing configuration for releasing the capsule in or into the transfer channel towards the mixing unit. The loader may have a capsule gate that is movable, such as pivotable and/or translatable, between a position obstructing the transfer channel for preventing a passage of the capsule along the channel and a position clearing the transfer channel for allowing a passage of the capsule along the channel. Details of suitable capsule loaders are disclosed in WO 2012/126971, WO 2014/056641, WO 2014/056642 and WO 2015/086371. Details of suitable capsule sensing are disclosed in WO 2012/123440, WO 2014/147128, PCT/EP15/060555, PCT/EP15/060561, PCT/EP15/060567, PCT/EP15/065415 and PCT/EP15/065535.

The actuator may have at least one of: an automatic actuator, e.g. a motor such as an electric motor; a semi-automatic actuator, e.g. a return-spring arrangement for automatically returning the first and second modules either into their distant configuration or into their proximate configuration; and a user-handle.

Such handle may be connected to at least one of the first and second modules and actuate at least one of the modules by moving the handle from a first position to a second position.

The handle in at least one of its first and second positions may be flush with at least one of the outside housing and a user-interface device.

The actuator can connected to at least one of the first and second modules by a transmission that comprises at least one of a belt transmission, a gear transmission, e.g. a toothed gear transmission, and a lever transmission.

The dispensing surface may be formed by an external placement support for placing such machine in position for preparing and dispensing said beverage.

The dispensing surface can be formed by a user-recipient support device of such machine. For instance, the user-recipient support device is removable from under the outlet, such as separable from a module of such machine and storable in a storage seat of such module, e.g. storable in the storage seat and secured therein by at least one of: friction and/or magnetic force between the seat and the support device; clipping or locking the support device in the seat; and covering the seat by at least one of a door, gate, housing cover e.g. a cocoon-type half shell, carrying handle and belt.

The machine may include a user-interface device, e.g. connected to a control unit of such machine, movable from: a deployed operative position adjacent to an outside face of the above one or more outside faces of the outside housing so that the device is accessible by a user for operating such machine to prepare and dispense said beverage; to a retracted storage position in the outside housing so that the device is inaccessible to a user for operating such machine; and/or vice versa.

The device may bear one or more touch elements, such as button(s) or a touch pad or a touch screen, and/or one or more user indicators, such as light means e.g. LED or signal screen.

The device can have in its deployed operative position a main outside face that is generally flush with the housing outside face that is adjacent to the user-interface device. For instance, the device's main outside face in the deployed operative position is predominantly surrounded, e.g. entirely surrounded, by housing outside faces that are flush with the device's main outside face.

For instance, the user-interface device is coupled to the dispensing head so as to be driven by the head or vice versa between the deployed operative and the retracted storage positions. The dispensing head and the user-interface device are for example coupled together by a rigid or an articulated arrangement, such as a cam-follower and cam arrangement or a flexible mechanically connector or by a lever arrangement.

The user-interface device may be movable, e.g. manually and/or automatically, from its deployed operative position into its retracted storage position and vice versa along a first direction and a second direction that is non-parallel to the first direction.

The first direction may follow a movement of the user-interface device generally sinking into and emerging from the outside housing, optionally the first direction being generally orthogonal to the housing outside face that is adjacent to device in its operative position or at an angle to such outside face that is in the range of 45 to 90 deg., such as 60 to 90 deg., e.g. 75 to 90 deg. The second direction may follow a movement of the user-interface device hiding behind and along the housing outside face that is adjacent to the user-interface device in its deployed operative position, optionally the second direction being generally parallel to the outside face that is adjacent to device in its operative position or at an angle to this outside face that is in the range of 0 to 45 deg., such as 0 to 30 deg., e.g. 0 to 15 deg.

The first direction can be at a large angle relative to a main outside face of the user-interface device in its deployed operative position, for instance a large angle in the range of 45 to 90 deg., such as a large angle of at least 60 deg., e.g. a large angle of at least or 75 or 85 deg. The second direction can be at a small angle relative to a main outside face of the user-interface device in its deployed operative position, for instance a small angle in the range of 0 to 45 deg., such as a small angle of less than 30 deg., e.g. a small angle of at less than 15 or 5 deg.

The user-interface device may be guided from its deployed operative position into its retracted storage position and vice versa by a cam-follower and cam arrangement. The cam of the arrangement can have a first section extending along the first direction and a second section extending along the second direction. The user-interface device may be associated with a pair of cams having different, sequentially off-set, profiles such that when the user-interface device is moved from the operative to the storage positions it has a front edge that is lowered and displaced underneath the outside housing while a rear edge of the device, uncovered by the outside housing, remains above the front edge during a part of a movement of the user-interface device between the operative and the storage positions.

The machine can have a power supply arrangement comprising a connector to an external power supply, such as an electric cord and/or plug connectable to the mains, and an internal power accumulator, such as a rechargeable battery, for powering to prepare and dispense the beverage when such machine is not powered via the connector. For instance, the accumulator is charged via the connector when connected to an external power supply.

The machine may include a docking station and a or the above module disconnectably connected to the docking station, the docking station and the module having at least one of: a station ingredient supply such as a water tank and a module liquid connector connectable to the station ingredient supply; and a station connector to an external power supply, such as a station electric cord and/or plug connectable to the mains, and a module connector, e.g. a rigid connector stationary in the module, connectable to the station connector, e.g. a rigid connector stationary in the station.

The module may include an arrangement for preparing and dispensing beverage.

The module can integrate the beverage outlet and the liquid circuit can include at least one of: a liquid supply arrangement, such as a main reservoir fluidically disconnectably connectable by a liquid connector to the docking station, e.g. to a main reservoir and/or to a liquid supply line of the docking station; the liquid driver, such as an electric pump e.g. a solenoid pump, a rotary pump, a diaphragm pump, a positive displacement pump or a peristaltic pump, for driving liquid to the outlet; the thermal conditioner, such as a liquid heater and/or cooler, for thermally conditioning liquid delivered by the outlet; and the above one or more liquid ducts for guiding liquid to be delivered by the outlet.

The module can incorporate at least one of: an internal power supply, such as a rechargeable battery; a connector to an external power supply, such as a module electric cord and/or plug connectable to the mains; and a or the above control unit for controlling the module and optionally functions contained in the docking station; and the user-interface device that is optionally connected, when present, to the control unit.

The machine may include one or more movable placement members for placing such machine, such as a or the above module of such machine, onto a generally flat external support surface in an orientation for preparing the beverage in the liquid circuit and delivering such beverage via the beverage outlet to the beverage dispensing surface.

The movable placement member(s) can have a deployed placement position for increasing a stability and/or safely placing such machine, e.g. such module, on the external support surface in an orientation for preparing and dispensing said beverage. For instance, the placement member(s) in the deployed placement position extending away from the outside housing and/or extending laterally beyond at least one of the side face, rear face and front face.

The movable placement member(s) can have a retracted rest position within the outside housing or collapsed against the outside housing, e.g. collapsed against and extending along the outside housing, for: reducing a size of such machine, e.g. a or the above module, to displace it; and/or providing a configuration suitable for placing a or the above module onto a or the above docking station of such machine and connecting the module to the docking station.

The placement member(s) can be pivotably and/or translationally mounted relative to the outside housing, for moving the placement member(s) from the deployed placement position to the retracted rest position and vice versa.

An incorporation of the placement member(s) in such machine may thus provide an overall size reduction when in the retracted rest position (e.g. for storing or displacing the machine) and/or provide a configuration suitable for placing a separable module (fitted with the placement member(s)) of the machine onto a docking station of such machine and connecting the module to the docking station, the module being placeable in the beverage preparation and dispensing orientation with the aid of the placement member(s) on an external support surface when not docked onto the docking station.

In the orientation for preparing the beverage in the liquid circuit and delivering such beverage via the beverage outlet to the beverage dispensing surface:
- the or at least one placement member in the deployed placement position may extend laterally beyond a housing outside face that extends upright above the placement member such as beyond the housing outside face by a horizontal distance of at least 3 mm such as in the range of 5 to 25 mm, e.g. 10 to 15 mm; and/or
- such machine has:
   - an overall height extending from a bottom end of the deployed placement member to a top end of such machine; and
   - an overall distance spacing a housing outside face extending upright above the placement member and a housing outside face facing the previous housing outside face,
   such that a ratio of the overall height/overall distance is of at least 1.3, such as at least 1.5, for instance at least 2, for example at 2.5, e.g. at least 3; and/or
- the outside housing has a bottom outside face adjacent to the or at least one placement member, the bottom outside face having a generally convex, biconvex, multi-convex or downwardly tapered shape, such as a generally rounded shape, e.g. cylindrical, spherical, ellipsoidal, ovoidal or conical shape, and/or such as generally polyhedral shape, e.g. prismatic or pyramidal shape.

The machine may have one or more stationary placement members for placing such machine, such as a or the above module of such machine, onto a generally flat external support surface. For instance, the machine has a stationary placement member protruding upright underneath such machine in an orientation for preparing and dispensing beverage.

### Brief Description of the Drawings

The invention will now be described with reference to the schematic drawings, wherein:
- Figure 1 is a perspective view of a machine in accordance with the invention;
- Figure 2 is a perspective view of a variation of the machine of Fig. 1 in a configuration for receiving an ingredient capsule;
- Figure 3 is a cross-sectional view of a module of the machine of Fig. 1 or 2 in a configuration for receiving an ingredient capsule;
- Figure 4 is a cross-sectional view of a module of the machine shown in Figs 1 or 2 in a closed configuration;
- Figure 5 is a cross-sectional view of a module of the machine shown in Fig. 1 or 2 in a compacted configuration;
- Figure 6 is a perspective view of the machine shown in Fig. 1 in a compacted configuration;
- Figures 7 and 8 illustrate the assembly of a user-interface device in the machine shown in any of Figs 1 to 6;
- Figure 9 is a perspective view of a module of the machine shown in any of Figs 1 to 8, the module having deployed placement members for placing the module on a support surface;
- Figure 10 is a perspective view of the module of Fig. 9 with its deployable placement members retracted;
- Figure 11 is a cross-sectional front view of the machine of Fig. 2 with the module's deployable placement members retracted so that the module fits on a docking station of the machine;
- Figure 12 is a side view of the module of the machine shown in any of Figs 1 to 11 in a configuration for storing a recipient support of the machine;
- Figure 13 is a side view of the module of the machine shown in Fig. 12 having an uncovered compartment in which the recipient support is stored; and
- Figure 14 is a side view of the module of the machine shown in Figs 12 and 13 upon covering the compartment of the recipient support with a cover.

### Detailed description

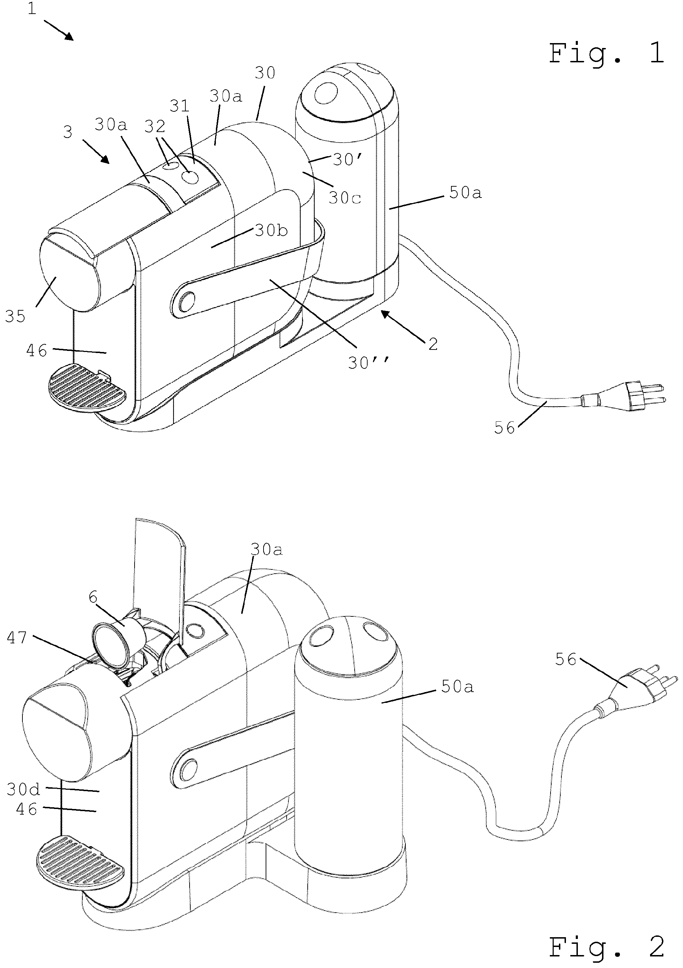

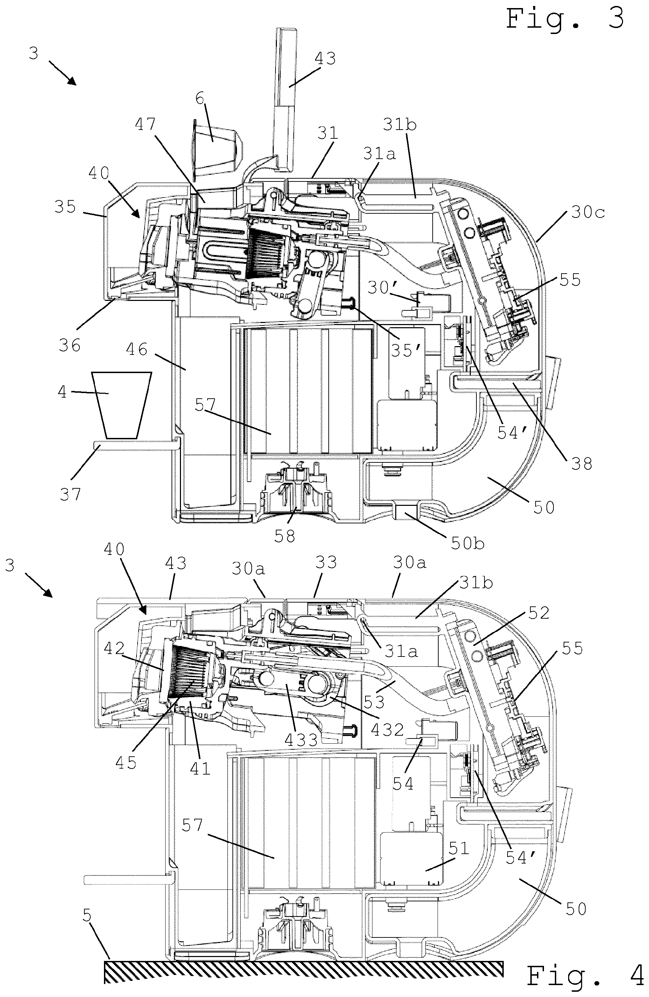

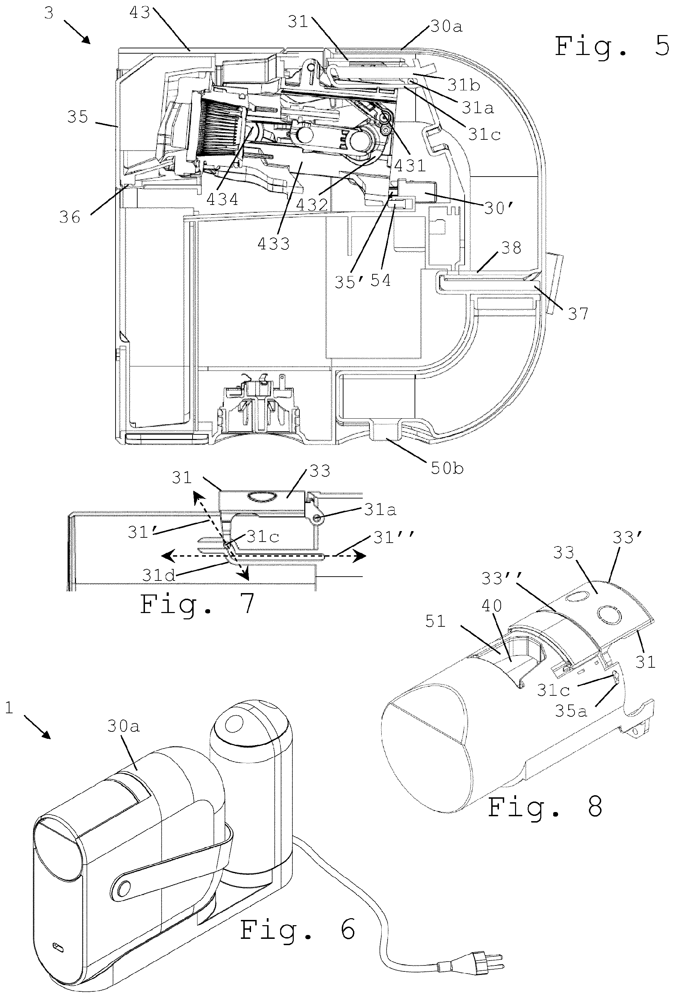

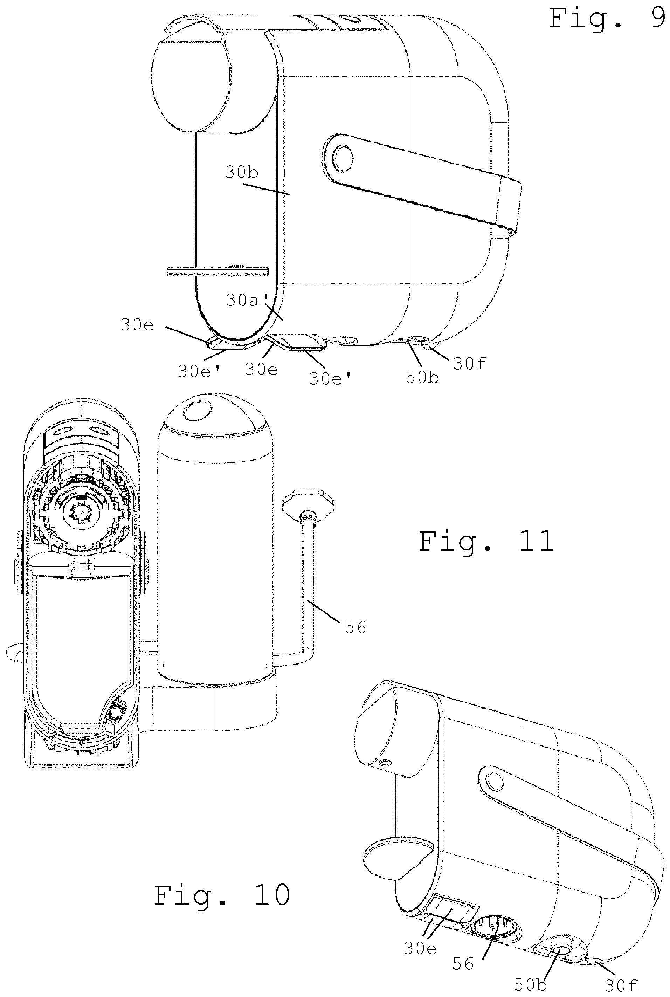

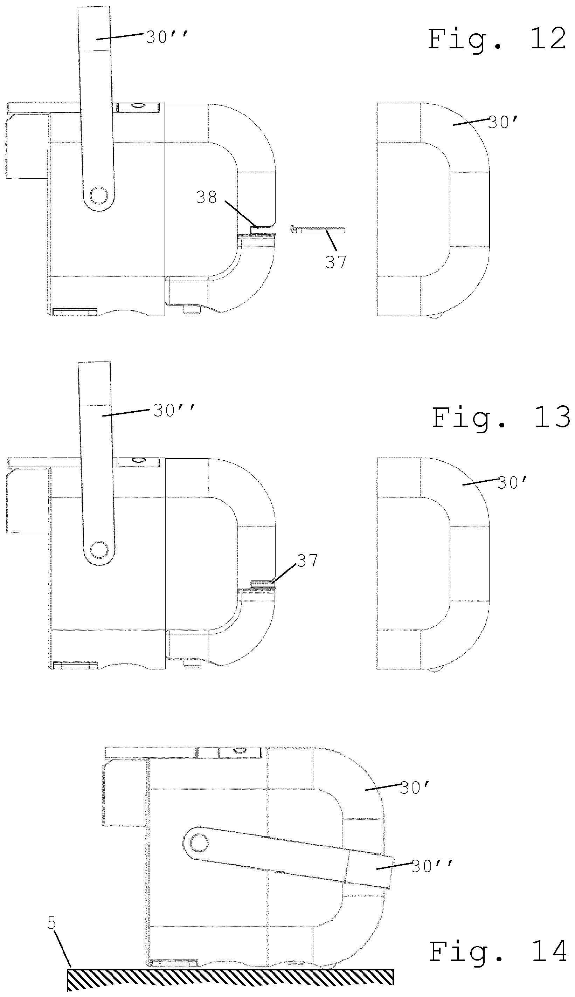

Figures 1 to 14 illustrate two exemplary embodiments (with minor design differences) of a beverage machine 1 in accordance with the invention. The differences are illustrated in Figs 1 and 2 and relate specifically to the arrangement in machine 1 of the liquid supply arrangement 50a.

Machine 1 is configured for preparing and dispensing a beverage, such as tea, coffee, hot chocolate, cold chocolate, milk, soup or baby food.

Machine 1 has an outside housing 30 having one or more outside faces 30a,30b,30c,30d, such as one or more faces selected from a top face 30a, a side face 30b, a rear face 30c and a front face 30d.

Machine 1 includes a dispensing head 35 that has a beverage outlet 36 and that is movable:
- outwards out of outside housing 30 into a deployed operative position in which a beverage is dispensible via outlet 36 to a beverage dispensing surface 5,37 for positioning a user-cup or user-mug 4; and
- inwards into outside housing 30 into a retracted storage position, optionally a storage position in which outlet 36 is confined within outside housing 30 and/or in which dispensing head 35 is surrounded by outside faces of outside housing 30 that are generally flush with apparent faces of dispensing head 35.

Machine 1 has a liquid circuit for processing the beverage and delivering such beverage into beverage outlet 36. The liquid circuit includes at least one activatable unit 40,51,52 that is passed through by liquid during beverage preparation. The activatable unit may be selected from: a liquid driver 51; a thermal conditioner 52; and an ingredient processing unit 40. For example, the liquid circuit comprising one or more liquid ducts 53 for guiding liquid to be delivered by outlet 36.

Dispensing head 35 is configured so that it can be maintained in: the deployed operative position whether activatable unit(s) 40,51,52 is/are activated or maintained activated or deactivated or maintained deactivated; and/or the retracted storage position whether activatable unit(s) 40,51,52 is/are activated or maintained activated or deactivated or maintained deactivated.

Dispensing head 35 may be movable manually by a user from the deployed operative position to the retracted storage position and/or vice versa. For instance, machine 1 has a power unit 54' comprising a main switch 54 that is directly or indirectly actuated by dispensing head 35 when moved between the deployed operative and the retracted storage positions.

Dispensing head 35 can be movable automatically, e.g. by a motor and/or an automatic return-spring, from the deployed operative position to the retracted storage position and/or vice versa. Optionally, head 35 is moved into its deployed operative position when machine 1 is powered and/or is moved into its retracted storage position when a powering of machine 1 is interrupted.

Dispensing head 35 may be maintained in its deployed operative position and/or in its retracted storage position by at least one of: a friction and/or magnetic force, clipping arrangement and locking arrangement 30',35'.

Dispensing head 35 can be guided from its deployed operative position into its retracted storage position and vice versa by a cam-follower 31a,31c and cam 31b,31d arrangement.

Dispensing head 35 includes ingredient processing unit 40 that has an ingredient holder forming an ingredient seat 45, e.g. a seat in which ingredients are mixed. For instance, the ingredient processing unit 40 has a first module 41 and a second module 42 that are movable relatively to each other by an actuator between:
- a distant configuration for inserting into seat 45 and/or removing from seat 45, e.g. towards a waste ingredient collector 46, an ingredient, e.g. a flavouring ingredient supplied within a capsule 6 into seat 45 for instance via an ingredient supply channel 47; and
- a proximate configuration for processing the ingredient in the seat 45.

The actuator may include at least one of: an automatic actuator, e.g. a motor such as an electric motor; a semi-automatic actuator, e.g. a return-spring arrangement for automatically returning the first and second modules either into their distant configuration or into their proximate configuration; and a user-handle 43, such as a handle 43 that is connected to at least one of first and second modules 41,42 and that actuates at least one of modules 41,42 by moving handle 43 from a first position to a second position. Handle 43 in at least one of its first and second positions can be flush with at least one of outside housing 30 and a user-interface device 31.

The actuator may be connected to at least one of first and second modules 41,42 by a transmission that comprises at least one of a belt transmission, a gear transmission, e.g. a toothed gear transmission, and a lever transmission 431,432,433,434.

Dispensing surface 5,37 may be formed by an external placement support 5 for placing such machine 1 in position for preparing and dispensing beverage.

Dispensing surface 5,37 can be formed by a user-recipient support device 37 of machine 1. For instance, user-recipient support device 37 is removable from under outlet 36, such as separable from a module 3 of such machine 1 and storable in a storage seat 38 of such module 3, e.g. storable in storage seat 38 and secured therein by at least one of:
- friction and/or magnetic force between seat 38 and support device 37;
- clipping or locking support device 37 in seat 38; and
- covering seat 38 by at least one of a door, gate, housing cover 30' e.g. a cocoon-type half shell, carrying handle 30'' and belt 30''.

Machine 1 may include (a) user-interface device 31, e.g. connected to a control unit 55 of machine 1, movable from: a deployed operative position adjacent to an outside face 30a of the one or more outside faces 30a,30b,30c of outside housing 30 so that device 31 is accessible by a user for operating machine 1 to prepare and dispense beverage; to a retracted storage position in outside housing 30 so that device 31 is inaccessible to a user for operating machine 1; and/or vice versa.

Device 31 may bear one or more touch elements, such as button(s) 32 or a touch pad or a touch screen, and/or one or more user indicators, such as light means e.g. LED or signal screen.

Device 31 can have in its deployed operative position a main outside face 33 that is generally flush with housing outside face 30a that is adjacent to user-interface device 31. Device's main outside face 33 in the deployed operative position may be predominantly surrounded, e.g. entirely surrounded, by housing outside faces 30a that are flush with the device's main outside face 33.

User-interface device 31 can be coupled to dispensing head 35 so as to be driven by head 35 or vice versa between the deployed operative and the retracted storage positions. For example, dispensing head 35 and user-interface device 31 is coupled together by a rigid or an articulated arrangement, such as a cam-follower 31c and cam 35a arrangement or a flexible mechanically connector or by a lever arrangement.

User-interface device 31 can be movable, e.g. manually and/or automatically, from its deployed operative position into its retracted storage position and vice versa along a first direction 31' and a second direction 31'' that is non-parallel to first direction 31'.

First direction 31' may follow a movement of user-interface device 31 generally sinking into and emerging from the outside housing 30, optionally first direction 31' being generally orthogonal to housing outside face 30a that is adjacent device 31 in its operative position or at an angle to outside face 30a that is in the range of 45 to 90 deg., such as 60 to 90 deg, e.g. 75 to 90 deg. Second direction 31'' may follow a movement of user-interface device 31 hiding behind and along outside face 30a that is adjacent to te user-interface device 31 in its deployed operative position, optionally second direction 31'' being generally parallel to outside face 30a that is adjacent to device 31 in its operative position or at an angle to such outside face that is in the range of 0 to 45 deg., such as 0 to 30 deg, e.g. 0 to 15 deg.

First direction 31' may be at a large angle relative to a main outside face 33 of user-interface device 31 in its deployed operative position, for instance a large angle in the range of 45 to 90 deg, such as a large angle of at least 60 deg., e.g. a large angle of at least or 75 or 85 deg. Second direction 31'' may be at a small angle relative to a main outside face 33 of user-interface device 31 in its deployed operative position, for instance a small angle in the range of 0 to 45 deg, such as a small angle of less than 30 deg., e.g. a small angle of at less than 15 or 5 deg.

User-interface device 31 may be guided from its deployed operative position into its retracted storage position and vice versa by a cam-follower 31a,31c and cam 31b,31d arrangement. Cam 31b,31d of the arrangement can have a first section extending along first direction 31' and a second section extending along second direction 31''. User-interface device 31 may be associated with a pair of cams 31b,31d having different, sequentially off-set, profiles such that when user-interface device 31 is moved from the operative to the storage positions it has a front edge 33' that is lowered and displaced underneath outside housing 30 while a rear edge 33'' of device 31, uncovered by outside housing 30, remains above front edge 33" during a part of a movement of user-interface device 31 between the operative and the storage positions.

Machine 1 can have a power supply arrangement comprising a connector 56 to an external power supply, such as an electric cord and/or plug connectable to the mains, and an internal power accumulator 57, such as a rechargeable battery, for powering to prepare and dispense beverage when machine 1 is not powered via connector 56. Accumulator 57 may be charged via connector 56 when connected to an external power supply.

Machine 1 may include a docking station 2 and a module 3 disconnectably connected to docking station 2.

Docking station 2 and module 3 can comprise at least one of: a station ingredient supply 50a such as a water tank and a module liquid connector 50b connectable to station ingredient supply 50a; and a station connector 56 to an external power supply, such as a station electric cord and/or plug connectable to the mains, and a module connector 58, e.g. a rigid connector stationary in module 3, connectable to station connector 56, e.g. a rigid connector stationary in station 2.

Module 3 can incorporate an arrangement for preparing and dispensing beverage. Module 3 can include (a) beverage outlet 36 for dispensing beverage to (a) beverage dispensing surface 5,37 arranged for supporting a user-mug or a user-cup 4 and the liquid circuit can include at least one of: a liquid supply arrangement 50, such as a main reservoir 50 fluidically disconnectably connectable by a liquid connector 50b to docking station 2, e.g. to a main reservoir 50 and/or to a liquid supply line of the docking station 2; liquid driver 51, such as an electric pump e.g. a solenoid pump, a rotary pump, a diaphragm pump, a positive displacement pump or a peristaltic pump, for driving liquid to outlet 36; thermal conditioner 52, such as a liquid heater and/or cooler, for thermally conditioning liquid delivered by outlet 36; and one or more liquid ducts 53 for guiding liquid to be delivered by outlet 36.

Module 3 may have at least one of: an internal power supply 57, such as a rechargeable battery; a connector to an external power supply 56, such as a module electric cord and/or plug connectable to the mains; and a or the above control unit 55 for controlling module 3 and optionally functions contained in docking station 2; and interface device 31 that is optionally connected, when present, to control unit 55.

Machine 1 may include one or more movable placement members 30e for placing such machine 1, such as a or the above module 3 of machine 1, onto a generally flat external support surface 5 in an orientation for preparing beverage in the liquid circuit and delivering such beverage via beverage outlet 36 to beverage dispensing surface 5,37.

Movable placement member(s) 30e may have a deployed placement position for increasing a stability and/or safely placing machine 1, e.g. of such module 3, on external support surface 5 in an orientation for preparing and dispensing beverage, optionally placement member(s) 30e in the deployed placement position extending away from outside housing 30 and/or extending laterally beyond at least one of side face 30b, rear face 30c and front face 30d.

Movable placement member(s) 30e can have a retracted rest position within outside housing 30 or collapsed against outside housing 30, e.g. collapsed against and extending along outside housing 30, for: reducing a size of such machine 1, e.g. such module 3, to displace it; and/or provide a configuration suitable for placing such module 3 onto a or the above docking station 2 of such machine 1 and connecting module 3 to docking station 2.

Placement member(s) 30e may be pivotably and/or translationally mounted relative to outside housing 30, for moving placement member(s) 30e from the deployed placement position to the retracted rest position and vice versa.

In the orientation for preparing the beverage in the liquid circuit and delivering such beverage via beverage outlet 36 to beverage dispensing surface 5,37:
- the or at least one placement member 30e in the deployed placement position may extend laterally beyond a housing outside face 30b;30c,30d that extends upright above said placement member 30e such as beyond such housing outside face 30b;30c,30d by a horizontal distance of at least 3 mm such as in the range of 5 to 25 mm, e.g. 10 to 15 mm; and/or
- such machine 1 can have:
   - an overall height extending from a bottom end 30' of deployed placement member 30e to a top end of machine 1; and
   - an overall distance spacing a housing outside face 30b;30c extending upright above placement member 30e and a housing outside face 30b;30d facing the former housing outside face 30b;30c,
   such that a ratio of the overall height/overall distance is of at least 1.3, such as at least 1.5, for instance at least 2, for example at 2.5, e.g. at least 3; and/or
- outside housing 30 can have a bottom outside face 30a' adjacent to the or at least one placement member 30e, bottom outside face 30a' having a generally convex, biconvex, multi-convex or downwardly tapered shape, such as a generally rounded shape, e.g. cylindrical, spherical, ellipsoidal, ovoidal or conical shape, and/or such as generally polyhedral shape, e.g. prismatic or pyramidal shape.

Machine 1 can have one or more stationary placement members 30f for placing such machine 1, such as a of the above module 3 of such machine 1, onto a generally flat external support surface 5. For instance, machine 1 has a stationary placement member 30f protruding upright underneath machine 1 in an orientation for preparing and dispensing beverage.

## Claims

1. A machine (1) for preparing and dispensing a beverage, such as tea, coffee, hot chocolate, cold chocolate, milk, soup or baby food, such machine (1) comprising:
- an outside housing (30) having one or more outside faces (30a,30b,30c,30d), such as one or more faces selected from a top face (30a), a side face (30b), a rear face (30c) and a front face (30d); and
- a dispensing head (35) that comprises an ingredient processing unit (40) and a beverage outlet (36), the processing unit (40) having ingredient holder forming an ingredient seat (45), e.g. a seat in which ingredients are mixed, the dispensing head (35) being movable:
- outwards out of the outside housing (30) into a deployed operative position in which a beverage is dispensible via the outlet (36) to a beverage dispensing surface (5,37) for positioning a user-cup or user-mug (4); and
- inwards into the outside housing (30) into a retracted storage position, optionally a storage position in which the outlet (36) is confined within the outside housing (30) and/or in which the dispensing head (35) is surrounded by outside faces of the outside housing (30) that are generally flush with apparent faces of the dispensing head (35);
and
- a liquid circuit for processing said beverage and delivering such beverage into the beverage outlet (36), the liquid circuit comprising at least one activatable unit (40,51,52) that is passed through by liquid during beverage preparation, such as an activatable unit selected from: a liquid driver (51); a thermal conditioner (52); and the ingredient processing unit (40), optionally the liquid circuit comprising one or more liquid ducts (53) for guiding liquid to be delivered by the outlet (36), the dispensing head (35) being configured so that it can be maintained in:
- the deployed operative position whether said activatable unit(s) (40,51,52) is/are activated or maintained activated or deactivated or maintained deactivated; and/or
- the retracted storage position whether said activatable unit(s) (40,51,52) is/are activated or maintained activated or deactivated or maintained deactivated.

2. The machine of claim 1, wherein the dispensing head (35) is configured to be movable:
- manually by a user from the deployed operative position to the retracted storage position and/or vice versa, optionally such machine (1) having a power unit (54') comprising a main switch (54) that is directly or indirectly actuated by the dispensing head when moved between the deployed operative and the retracted storage positions; and/or
- automatically, e.g. by a motor and/or an automatic return-spring, from the deployed operative position to the retracted storage position and/or vice versa, optionally the dispensing head (35) being moved into its deployed operative position when such machine (1) is powered and/or is moved into its retracted storage position when a powering of such machine (1) is interrupted.

3. The machine of claim 1 or 2, wherein the dispensing head (35) is maintained in its deployed operative position and/or in its retracted storage position by at least one of: a friction and/or magnetic force, clipping arrangement and locking arrangement (30',35').

4. The machine of any preceding claim, wherein the dispensing head (35) is guided from its deployed operative position into its retracted storage position and vice versa by a cam-follower (31a,31c) and cam (31b,31d) arrangement.

5. The machine of any preceding claim, wherein the ingredient processing unit (40) has a first module (41) and a second module (42) that are movable relatively to each other by an actuator between:
- a distant configuration for inserting into the seat (45) and/or removing from the seat (45), e.g. towards a waste ingredient collector (46), an ingredient, e.g. a flavouring ingredient supplied within a capsule (6) into the seat (45) for instance via an ingredient supply channel (47); and
- a proximate configuration for processing the ingredient in the seat (45),
such actuator comprising at least one of:
- an automatic actuator, e.g. a motor such as an electric motor;
- a semi-automatic actuator, e.g. a return-spring arrangement for automatically returning the first and second modules either into their distant configuration or into their proximate configuration; and
- a user-handle (43), such as a handle (43) that is connected to at least one of the first and second modules (41,42) and that actuates said at least one of the modules (41,42) by moving the handle (43) from a first position to a second position, optionally the handle (43) in at least one of its first and second positions being flush with at least one of the outside housing (30) and a user-interface device (31),
optionally such actuator being connected to at least one of the first and second modules (41,42) by a transmission that comprises at least one of a belt transmission, a gear transmission, e.g. a toothed gear transmission, and a lever transmission (431,432,433,434).

6. The machine of any preceding claim, wherein said dispensing surface (5,37) is formed by:
- an external placement support (5) for placing such machine (1) in position for preparing and dispensing said beverage; and/or
- a user-recipient support device (37) of such machine (1), optionally the user-recipient support device (37) being removable from under the outlet (36), such as separable from a module (3) of such machine (1) and storable in a storage seat (38) of such module (3), e.g. storable in the storage seat (38) and secured therein by at least one of: friction and/or magnetic force between the seat (38) and the support device (37); clipping or locking the support device (37) in the seat (38); and covering the seat (38) by at least one of a door, gate, housing cover (30') e.g. a cocoon-type half shell, carrying handle (30") and belt (30'').

7. The machine of any preceding claim, which comprises a user-interface device (31), e.g. connected to a control unit (55) of such machine (1), movable from:
- a deployed operative position adjacent to an outside face (30a) of said one or more outside faces (30a,30b,30c) of the outside housing (30) so that the device (31) is accessible by a user for operating such machine (1) to prepare and dispense said beverage; to
- a retracted storage position in the outside housing (30) so that the device (31) is inaccessible to a user for operating such machine (1); and/or vice versa, optionally the device (31):
- bearing one or more touch elements, such as button(s) (32) or a touch pad or a touch screen, and/or one or more user indicators, such as light means e.g. LED or signal screen; and/or
- having in its deployed operative position a main outside face (33) that is generally flush with the housing outside face (30a) that is adjacent to the user-interface device (31), optionally the device's main outside face (33) in the deployed operative position being predominantly surrounded, e.g. entirely surrounded, by housing outside faces (30a) that are flush with the device's main outside face (33).

8. The machine of any preceding claim, wherein the user-interface device (31) is coupled to the dispensing head (35) so as to be driven by the head (35) or vice versa between the deployed operative and the retracted storage positions, the dispensing head (35) and the user-interface device (31) being for example coupled together by a rigid or an articulated arrangement, such as a cam-follower (31c) and cam (35a) arrangement or a flexible mechanically connector or by a lever arrangement.

9. The machine of claim 7 or 8, wherein the user-interface device (31) is movable, e.g. manually and/or automatically, from its deployed operative position into its retracted storage position and vice versa along a first direction (31') and a second direction (31'') that is non-parallel to the first direction (31'), optionally:
A) the first and second directions being oriented so that:
- the first direction (31') follows a movement of the user-interface device (31) generally sinking into and emerging from the outside housing (30), optionally the first direction (31') being generally orthogonal to the housing outside face (30a) that is adjacent to device (31) in its operative position or at an angle to said outside face (30a) that is in the range of 45 to 90 deg., such as 60 to 90 deg., e.g. 75 to 90 deg.; and
- the second direction (31'') follows a movement of the user-interface device (31) hiding behind and along the housing face (30a) that is adjacent to the user-interface device (31) in its deployed operative position, optionally the second direction (31'') being generally parallel to the outside face (30a) that is adjacent to device (31) in its operative position or at an angle to outside said face that is in the range of 0 to 45 deg., such as 0 to 30 deg., e.g. 0 to 15 deg.;
or
B) the first and second directions being oriented so that:
- the first direction (31') is at a large angle relative to a main outside face (33) of the user-interface device (31) in its deployed operative position, for instance a large angle in the range of 45 to 90 deg, such as a large angle of at least 60 deg., e.g. a large angle of at least or 75 or 85 deg.; and
- the second direction (31") is at a small angle relative to a main outside face (33) of the user-interface device (31) in its deployed operative position, for instance a small angle in the range of 0 to 45 deg, such as a small angle of less than 30 deg., e.g. a small angle of at less than 15 or 5 deg.

10. The machine of any one of claims 7 to 9, wherein the user-interface device (31) is guided from its deployed operative position into its retracted storage position and vice versa by a cam-follower (31a,31c) and cam (31b,31d) arrangement, optionally the cam (31b,31d) of the arrangement having a first section extending along the first direction (31') and a second section extending along the second direction (31''), for instance the user-interface device (31) being associated with a pair of cams (31b,31d) having different, sequentially off-set, profiles such that when the user-interface device (31) is moved from the operative to the storage positions it has a front edge (33') that is lowered and displaced underneath the outside housing (30) while a rear edge (33'') of the device (31), uncovered by the outside housing (30), remains above the front edge (33'') during a part of a movement of the user-interface device (31) between the operative and the storage positions.

11. The machine of any preceding claim, which has a power supply arrangement comprising a connector (56) to an external power supply, such as an electric cord and/or plug connectable to the mains, and an internal power accumulator (57), such as a rechargeable battery, for powering to prepare and dispense said beverage when such machine (1) is not powered via said connector (56), the accumulator (57) being optionally charged via the connector (56) when connected to an external power supply.

12. The machine of any preceding claim, which comprises a docking station (2) and a or said module (3) disconnectably connected to the docking station (2), the docking station (2) and the module (3) comprising at least one of:
- a station ingredient supply (50a) such as a water tank and a module liquid connector (50b) connectable to the station ingredient supply (50a); and
- a station connector (56) to an external power supply, such as a station electric cord and/or plug connectable to the mains, and a module connector (58), e.g. a rigid connector stationary in the module (3), connectable to the station connector (56), e.g. a rigid connector stationary in the station (2),
the module (3) comprising an arrangement for preparing and dispensing said beverage, for instance the module comprising the beverage outlet (36) and the liquid circuit that comprises at least one of:
- a liquid supply arrangement (50), such as a main reservoir (50) fluidically disconnectably connectable by a liquid connector (50b) to the docking station (2), e.g. to a main reservoir (50) and/or to a liquid supply line of the docking station (2);
- the liquid driver (51), such as an electric pump e.g. a solenoid pump, a rotary pump, a diaphragm pump, a positive displacement pump or a peristaltic pump, for driving liquid to the outlet (36);
- the thermal conditioner (52), such as a liquid heater and/or cooler, for thermally conditioning liquid delivered by the outlet (36); and
- said one or more liquid ducts (53) for guiding liquid to be delivered by the outlet (36),
optionally the module (3) comprising at least one of:
- an internal power supply (57), such as a rechargeable battery;
- a connector to an external power supply (56), such as a module electric cord and/or plug connectable to the mains; and
- a or said control unit (55) for controlling the module (3) and optionally functions contained in the docking station; and
- the user-interface device (31) that is optionally connected, when present, to the control unit (55).

13. The machine of any preceding claim, which comprises one or more movable placement members (30e) for placing such machine (1), such as a or said module (3) of such machine (1), onto a generally flat external support surface (5) in an orientation for preparing said beverage in the liquid circuit and delivering such beverage via the beverage outlet (36) to the beverage dispensing surface (5,37), said movable placement member(s) (30e) having:
- a deployed placement position for increasing a stability and/or safely placing such machine (1), e.g. such module (3), on said external support surface (5) in an orientation for preparing and dispensing said beverage, optionally the placement member(s) (30e) in the deployed placement position extending away from the outside housing (30) and/or extending laterally beyond at least one of said side face (30b), rear face (30c) and front face (30d); and
- a retracted rest position within the outside housing (30) or collapsed against the outside housing (30), e.g. collapsed against and extending along the outside housing (30), for:
- reducing a size of such machine (1), e.g. a or said module (3) of such machine (1), to displace it; and/or
- providing a configuration suitable for placing said module (3) onto a or said docking station (2) of such machine (1) and connecting the module (3) to the docking station (2),
optionally, the placement member(s) (30e) being pivotably and/or translationally mounted relative to the outside housing (30), for moving the placement member(s) from the deployed placement position to the retracted rest position and vice versa.

14. The machine of claim 13, wherein in said orientation:
- the or at least one placement member (30e) in the deployed placement position extends laterally beyond a housing outside face (30b;30c,30d) that extends upright above said placement member (30e) such as beyond said housing outside face (30b;30c,30d) by a horizontal distance of at least 3 mm such as in the range of 5 to 25 mm, e.g. 10 to 15 mm; and/or
- such machine (1) has:
- an overall height extending from a bottom end (30') of the deployed placement member (30e) to a top end of such machine (1); and
- an overall distance spacing a housing outside face (30b;30c) extending upright above the placement member (30e) and a facing housing outside face (30b;30d),
such that a ratio of the overall height/overall distance is of at least 1.3, such as at least 1.5, for instance at least 2, for example at 2.5, e.g. at least 3; and/or
- the outside housing (30) has a bottom outside face (30a') adjacent to the or at least one placement member (30e), the bottom outside face having a generally convex, biconvex, multi-convex or downwardly tapered shape, such as a generally rounded shape, e.g. cylindrical, spherical, ellipsoidal, ovoidal or conical shape, and/or such as generally polyhedral shape, e.g. prismatic or pyramidal shape.

15. The machine of any preceding claim, wherein the machine has one or more stationary placement members (30f) for placing such machine (1), such as a or said module (3) of such machine (1), onto a generally flat external support surface (5), optionally the machine has a stationary placement member (30f) protruding upright underneath such machine (1) in an orientation for preparing and dispensing said beverage.

## Patentansprüche

1. Maschine (1) zum Zubereiten und Ausgeben eines Getränks, wie Tee, Kaffee, heiße Schokolade, kalte Schokolade, Milch, Suppe oder Babynahrung, eine derartige Maschine (1) umfassend:
- ein Außengehäuse (30), das eine oder mehrere Außenflächen (30a, 30b, 30c, 30d) aufweist, wie eine oder mehrere Flächen, die aus einer oberen Fläche (30a), einer Seitenfläche (30b), einer hinteren Fläche (30c) und einer vorderen Fläche (30d) ausgewählt sind; und
- einen Ausgabekopf (35), der eine Zutatenverarbeitungseinheit (40) und einen Getränkeauslass (36) umfasst, wobei die Verarbeitungseinheit (40) einen Zutatenkorb aufweist, der eine Zutatenaufnahme (45) ausbildet, z. B. eine Aufnahme, in der Zutaten gemischt werden, wobei der Ausgabekopf (35) bewegbar ist:
- nach außen aus dem Außengehäuse (30) in eine ausgefahrene Betriebsposition, in der ein Getränk über den Auslass (36) an eine Getränkeausgabeoberfläche (5, 37) zum Positionieren einer Benutzertasse oder eines Benutzerbechers (4) ausgebbar ist; und
- nach innen in das Außengehäuse (30) in eine eingefahrene Aufbewahrungsposition, optional eine Aufbewahrungsposition, in der der Auslass (36) innerhalb des Außengehäuses (30) eingeschlossen ist und/oder in der der Ausgabekopf (35) von Außenflächen des Außengehäuses (30) umgeben ist, die im Allgemeinen mit den sichtbaren Flächen des Ausgabekopfs (35) bündig sind;
und
- einen Flüssigkeitskreislauf zum Verarbeiten des Getränks und Liefern eines derartigen Getränks in den Getränkeauslass (36), der Flüssigkeitskreislauf umfassend mindestens eine aktivierbare Einheit (40, 51, 52), die während einer Getränkezubereitung durch Flüssigkeit passiert wird, wie eine aktivierbare Einheit, die ausgewählt ist aus: einem Flüssigkeitstreiber (51); einem thermischen Konditionierer (52); und der Zutatenverarbeitungseinheit (40), optional der Flüssigkeitskreislauf umfassend einen oder mehrere Flüssigkeitskanäle (53) zum Führen der Flüssigkeit, die durch den Auslass (36) geliefert werden soll,
wobei der Ausgabekopf (35) so konfiguriert ist, dass er gehalten werden kann in:
- der ausgefahrenen Betriebsposition, egal ob die aktivierbare(n) Einheit(en) (40, 51, 52) aktiviert ist/sind oder aktiviert gehalten wird/werden oder deaktiviert ist/sind oder deaktiviert gehalten wird/werden; und/oder
- der eingefahrenen Aufbewahrungsposition, egal ob die aktivierbare(n) Einheit(en) (40, 51, 52) aktiviert ist/sind oder aktiviert gehalten wird/werden oder deaktiviert ist/sind oder deaktiviert gehalten wird/werden.

2. Maschine nach Anspruch 1, wobei der Ausgabekopf (35) konfiguriert ist, um bewegbar zu sein:
- manuell durch einen Benutzer von der ausgefahrenen Betriebsposition in die eingefahrene Aufbewahrungsposition und/oder umgekehrt, optional wobei eine derartige Maschine (1) eine Stromversorgungseinheit (54') aufweist, umfassend einen Hauptschalter (54), der durch den Ausgabekopf direkt oder indirekt betätigt wird, wenn er zwischen der ausgefahrenen Betriebsposition und der eingefahrenen Aufbewahrungsposition bewegt wird; und/oder
- automatisch, z. B. durch einen Motor und/oder eine automatische Rückholfeder, von der ausgefahrenen Betriebsposition in die eingefahrene Aufbewahrungsposition und/oder umgekehrt, optional wobei der Ausgabekopf (35) in seine ausgefahrene Betriebsposition bewegt wird, wenn die Maschine (1) mit Strom versorgt wird und/oder in seine eingefahrene Aufbewahrungsposition bewegt wird, wenn eine Stromversorgung einer derartigen Maschine (1) unterbrochen wird.

3. Maschine nach Anspruch 1 oder 2, wobei der Ausgabekopf (35) in seiner ausgefahrenen Betriebsposition und/oder in seiner eingefahrenen Aufbewahrungsposition durch mindestens eines gehalten wird von: einer Reibungs- und/oder Magnetkraft, einer Festhalteanordnung und eine Verriegelungsanordnung (30', 35').

4. Maschine nach einem der vorstehenden Ansprüche, wobei der Ausgabekopf (35) durch eine Anordnung aus einem Nockenstößel (31a, 31c) und einem Nocken (31b, 31d) aus seiner ausgefahrenen Betriebsposition in seine eingefahrene Aufbewahrungsposition und umgekehrt geführt wird.

5. Maschine nach einem der vorstehenden Ansprüche, wobei die Zutatenverarbeitungseinheit (40) ein erstes Modul (41) und ein zweites Modul (42) aufweist, die durch eine Betätigungseinrichtung relativ zueinander bewegbar sind zwischen:
- einer entfernten Konfiguration zum Einsetzen in die Aufnahme (45) und/oder Entfernen aus der Aufnahme (45), z. B. in Richtung eines Abfallzutatensammlers (46), einer Zutat, z. B. einer Aromazutat, die innerhalb einer Kapsel (6) in die Aufnahme (45) zugeführt wird, zum Beispiel über einen Zutatenzufuhrkanal (47); und
- einer nahen Konfiguration zum Verarbeiten der Zutat in der Aufnahme (45),
eine derartige Betätigungseinrichtung umfassend mindestens eines von:
- einer automatischen Betätigungseinrichtung, z. B. einen Motor wie einen Elektromotor;
- einer halbautomatischer Betätigungseinrichtung, z. B. eine Rückholfederanordnung zum automatischen Zurückholen des ersten und des zweiten Moduls entweder in ihre entfernte Konfiguration oder in ihre nahe Konfiguration; und
- einem Benutzergriff (43), wie einen Griff (43), der mit mindestens einem des ersten und des zweiten Moduls (41, 42) verbunden ist und der mindestens eines der Module (41, 42) durch Bewegens des Griffs (43) von einer ersten Position in eine zweite Position betätigt, optional wobei der Griff (43) in mindestens einer seiner ersten und seiner zweiten Position mit mindestens einem des Außengehäuses (30) und einer Benutzerschnittstellenvorrichtung (31) bündig ist,
optional wobei eine derartige Betätigungseinrichtung mit mindestens einem des ersten und des zweiten Moduls (41, 42) durch ein Getriebe verbunden ist, das mindestens eines von einem Riemengetriebe, einem Rädergetriebe, z. B. einem Zahnradgetriebe, und einem Hebelgetriebe (431, 432, 433, 434) umfasst.

6. Maschine nach einem der vorstehenden Ansprüche, wobei die Ausgabeoberfläche (5, 37) ausgebildet ist durch:
- einen externen Platzierungsträger (5) zum Platzieren der Maschine (1) in Position zum Zubereiten und Ausgeben des Getränks; und/oder
- eine Benutzerauffanggefäßträgervorrichtung (37) einer derartigen Maschine (1), optional wobei die Benutzerauffanggefäßträgervorrichtung (37) von unterhalb des Auslasses (36) entfernbar ist, wie von einem Modul (3) einer derartigen Maschine (1) lösbar und in einer Aufbewahrungsaufnahme (38) eines derartigen Moduls (3) aufbewahrbar, z. B. in der Aufbewahrungsaufnahme (38) aufbewahrbar und darin durch mindestens eines gesichert von: Reibung und/oder Magnetkraft zwischen der Aufnahme (38) und der Trägervorrichtung (37); Festhalten oder Verriegeln der Trägervorrichtung (37) in der Aufnahme (38); und Abdecken der Aufnahme (38) durch mindestens eines von einer Tür, einem Tor, einer Gehäuseabdeckung (30'), z. B. einer kokonartigen Halbschale, einem Transportgriff (30") und einem Gurt (30").

7. Maschine nach einem der vorstehenden Ansprüche, die eine Benutzerschnittstellenvorrichtung (31) umfasst, die z. B. mit einer Steuereinheit (55) einer derartigen Maschine (1) verbunden ist, die bewegbar ist von:
- einer ausgefahrenen Betriebsposition neben einer Außenfläche (30a) der einen oder mehreren Außenflächen (30a, 30b, 30c) des Außengehäuses (30), so dass die Vorrichtung (31) für einen Benutzer zum Betreiben einer derartigen Maschine (1) zugänglich ist, um das Getränk zuzubereiten und auszugeben; in
- eine eingefahrene Aufbewahrungsposition in dem Außengehäuse (30), so dass die Vorrichtung (31) für einen Benutzer zum Betreiben der Maschine (1) unzugänglich ist; und/oder umgekehrt,
optional die Vorrichtung (31):
- ein oder mehrere Berührungsbauteile, wie (eine) Taste(n) (32) oder ein Touchpad oder einen Touchscreen, und/oder eine oder mehrere Benutzeranzeigen, wie Leuchtmittel, z. B. eine LED oder einen Signalbildschirm, lagert; und/oder
- in ihrer ausgefahrenen Betriebsposition eine Hauptaußenfläche (33) aufweist, die im Allgemeinen mit der Gehäuseaußenfläche (30a) bündig ist, die neben der Benutzerschnittstellenvorrichtung (31) ist, optional wobei die Hauptaußenfläche (33) der Vorrichtung in der ausgefahrenen Betriebsposition überwiegend umgeben, z. B. vollständig umgeben, von Gehäuseaußenflächen (30a) ist, die mit der Hauptaußenfläche (33) der Vorrichtung bündig sind.

8. Maschine nach einem der vorstehenden Ansprüche, wobei die Benutzerschnittstellenvorrichtung (31) mit dem Ausgabekopf (35) gekoppelt ist, um durch den Kopf (35) oder umgekehrt zwischen der ausgefahrenen Betriebsposition und der eingefahrenen Aufbewahrungsposition getrieben zu werden, wobei der Ausgabekopf (35) und die Benutzerschnittstellenvorrichtung (31) beispielsweise durch eine starre oder eine gelenkige Anordnung, wie eine Anordnung aus dem Nockenstößel (31c) und dem Nocken (35a) oder einen flexiblen mechanischen Verbinder oder durch eine Hebelanordnung miteinander gekoppelt sind.

9. Maschine nach Anspruch 7 oder 8, wobei die Benutzerschnittstellenvorrichtung (31) z. B. manuell und/oder automatisch von ihrer ausgefahrenen Betriebsposition in ihre eingefahrene Aufbewahrungsposition und umgekehrt entlang einer ersten Richtung (31') und einer zweiten Richtung (31") bewegbar ist, die nicht parallel zu der ersten Richtung (31') ist, optional:
A) wobei die erste und die zweite Richtung so ausgerichtet sind, dass:
- die erste Richtung (31') einer Bewegung der Benutzerschnittstellenvorrichtung (31) folgt, die im Allgemeinen in das Außengehäuse (30) einsinkt und aus diesem heraustritt, optional wobei die erste Richtung (31') im Allgemeinen orthogonal zu der Gehäuseaußenfläche (30a), die neben der Vorrichtung (31) in ihrer Betriebsposition ist, oder in einem Winkel zu der Außenfläche (30a) ist, der in dem Bereich von 45 bis 90 Grad liegt, wie 60 bis 90 Grad, z. B. 75 bis 90 Grad; und
- die zweite Richtung (31") einer Bewegung der Benutzerschnittstellenvorrichtung (31) folgt, die sich hinter und entlang der Gehäusefläche (30a) verbirgt, die neben der Benutzerschnittstellenvorrichtung (31) in ihrer ausgefahrenen Betriebsposition ist, optional wobei die zweite Richtung (31") im Allgemeinen parallel zu der Außenfläche (30a) ist, die neben der Vorrichtung (31) in ihrer Betriebsposition oder in einem Winkel zu der Außenseite der Fläche ist, der in dem Bereich von 0 bis 45 Grad liegt, wie 0 bis 30 Grad, z. B. 0 bis 15 Grad;
oder
B) wobei die erste und die zweite Richtung so ausgerichtet sind, dass:
- die erste Richtung (31') in einem großen Winkel relativ zu einer Hauptaußenfläche (33) der Benutzerschnittstellenvorrichtung (31) in ihrer ausgefahrenen Betriebsposition ist, zum Beispiel einem großen Winkel in dem Bereich von 45 bis 90 Grad, wie einem großen Winkel von mindestens 60 Grad, z. B. einem großen Winkel von mindestens 75 oder 85 Grad; und
- die zweite Richtung (31") in einem kleinen Winkel relativ zu einer Hauptaußenfläche (33) der Benutzerschnittstellenvorrichtung (31) in ihrer ausgefahrenen Betriebsposition ist, zum Beispiel einem kleinen Winkel in dem Bereich von 0 bis 45 Grad, wie einem kleinen Winkel von weniger als 30 Grad, z. B. einem kleinen Winkel von weniger als 15 oder 5 Grad.

10. Maschine nach einem der Ansprüche 7 bis 9, wobei die Benutzerschnittstellenvorrichtung (31) von ihrer ausgefahrenen Betriebsposition in ihre eingefahrene Aufbewahrungsposition und umgekehrt durch eine Anordnung aus dem Nockenstößel (31a, 31c) und dem Nocken (31b, 31d) geführt wird, optional wobei der Nocken (31b, 31d) der Anordnung einen ersten Abschnitt, der sich entlang der ersten Richtung (31') erstreckt, und einen zweiten Abschnitt aufweist, der sich entlang der zweiten Richtung (31") erstreckt, zum Beispiel die Benutzerschnittstellenvorrichtung (31) mit einem Paar Nocken (31b, 31d) verknüpft ist, die unterschiedliche, sequentiell versetzte Profile derart aufweisen, dass, wenn die Benutzerschnittstellenvorrichtung (31) von der Betriebs- in die Aufbewahrungsposition bewegt wird, sie eine Vorderkante (33') aufweist, die heruntergelassen und unterhalb des Außengehäuses (30) verschoben wird, während eine hintere Kante (33") der Vorrichtung (31), die durch das Außengehäuse (30) nicht abgedeckt ist, während eines Teils einer Bewegung der Benutzerschnittstellenvorrichtung (31) zwischen der Betriebs- und der Aufbewahrungsposition über der Vorderkante (33") verbleibt.

11. Maschine nach einem der vorstehenden Ansprüche, die eine Stromzufuhranordnung aufweist, umfassend einen Verbinder (56) für eine externe Stromzufuhr, wie ein Anschlusskabel und/oder einen Stecker, das/der mit dem Stromnetz verbindbar ist, und einen internen Stromspeicher (57), wie einen Akku, für die Stromversorgung, um das Getränk zuzubereiten und auszugeben, wenn eine derartige Maschine (1) nicht über den Verbinder (56) mit Strom versorgt wird, wobei der Akkumulator (57) optional über den Verbinder (56) aufgeladen wird, wenn er mit einer externen Stromzufuhr verbunden ist.

12. Maschine nach einem der vorstehenden Ansprüche, die eine Dockingstation (2) und ein oder das Modul (3) umfasst, das mit der Dockingstation (2) trennbar verbunden ist, die Dockingstation (2) und das Modul (3) umfassend mindestens eines von:
- einer Stationszutatenzufuhr (50a), wie einen Wassertank, und einem Modulflüssigkeitsverbinder (50b), der mit der Stationszutatenzufuhr (50a) verbindbar ist; und
- einem Stationsverbinder (56) für eine externe Stromzufuhr, wie ein(en) Stationsanschlusskabel und/oder -stecker, das/der mit dem Stromnetz verbindbar ist, und einem Modulverbinder (58), z. B. einen starren Verbinder, der in dem Modul (3) ortsfest ist, der mit dem Stationsverbinder (56) verbindbar ist, z. B. einen starren Verbinder, der in der Station (2) ortsfest ist,
das Modul (3) umfassend eine Vorrichtung zum Zubereiten und Ausgeben des Getränks, zum Beispiel das Modul, umfassend den Getränkeauslass (36) und den Flüssigkeitskreislauf, das mindestens eines umfasst von:
- einer Flüssigkeitsversorgungsanordnung (50), wie ein Hauptreservoir (50), das durch einen Flüssigkeitsverbinder (50b) mit der Dockingstation (2), z. B. mit einem Hauptreservoir (50) und/oder mit einer Flüssigkeitsversorgungsleitung der Dockingstation (2), fluidisch trennbar verbindbar ist;
- dem Flüssigkeitstreiber (51), wie eine elektrische Pumpe, z. B. eine Magnetpumpe, eine Rotationspumpe, eine Membranpumpe, eine Verdrängerpumpe oder eine Schlauchpumpe, zum Treiben der Flüssigkeit zu dem Auslass (36);
- dem thermischen Konditionierer (52), wie einen Flüssigkeitserhitzer und/oder -kühler, zum thermischen Konditionieren von Flüssigkeit, die durch den Auslass (36) geliefert wird; und
- dem einen oder den mehreren Flüssigkeitskanälen (53) zum Führen von Flüssigkeit, die durch den Auslass (36) geliefert werden soll,
optional das Modul (3) umfassend mindestens eines von:
- einer internen Stromzufuhr (57), wie einen wiederaufladbaren Akku;
- einem Verbinder für eine externe Stromzufuhr (56), wie ein(en) Modulanschlusskabel und/oder -stecker, das/der mit dem Stromnetz verbindbar ist; und
- einer oder der Steuereinheit (55) zum Steuern des Moduls (3) und optional Funktionen, die in der Dockingstation enthalten sind; und
- der Benutzerschnittstellenvorrichtung (31), die optional, wenn vorhanden, mit der Steuereinheit (55) verbunden ist.

13. Maschine nach einem der vorstehenden Ansprüche, die ein oder mehrere bewegbare Platzierungselemente (30e) zum Platzieren einer derartigen Maschine (1), wie eines oder des Moduls (3) einer derartigen Maschine (1), auf einer im Allgemeinen flachen äußeren Trägeroberfläche (5) in einer Ausrichtung zum Zubereiten des Getränks in dem Flüssigkeitskreislauf und Ausgeben eines derartigen Getränks über den Getränkeauslass (36) an die Getränkeausgabeoberfläche (5, 37) umfasst, wobei das/die bewegbare(n) Platzierungselement(e) (30e) aufweist/aufweisen:
- eine ausgefahrene Platzierungsposition zum Erhöhen einer Stabilität und/oder sicheren Platzieren einer derartigen Maschine (1), z. B. eines derartigen Moduls (3), auf der externen Trägeroberfläche (5) in einer Ausrichtung zum Zubereiten und Ausgeben des Getränks, optional wobei sich das/die Platzierungselement(e) (30e) in der ausgefahrenen Platzierungsposition von dem Außengehäuse (30) weg erstreckt/erstrecken und/oder sich seitlich über mindestens eine der Seitenfläche (30b), der hinteren Fläche (30c) und der vorderen Seite (30d) hinaus erstreckt/erstrecken; und
- eine eingefahrene Ruheposition innerhalb des Außengehäuses (30) oder zusammengeklappt gegen das Außengehäuse (30), z. B. zusammengeklappt gegen und sich erstreckend entlang des Außengehäuses (30), zum:
- Verkleinern einer Größe einer derartigen Maschine (1), z. B. eines oder des Moduls (3) einer derartigen Maschine (1), um sie zu verschieben; und/oder
- Bereitstellen einer Konfiguration, die zum Platzieren des Moduls (3) auf einer oder der Dockingstation (2) einer derartigen Maschine (1) und Verbinden des Moduls (3) mit der Dockingstation (2) geeignet ist,
optional wobei das/die Platzierungselement(e) (30e) relativ zu dem Außengehäuse (30) schwenkbar und/oder translatorisch montiert ist/sind, zum Bewegen des Platzierungselements/der Platzierungselemente aus der ausgefahrenen Platzierungsposition in die eingefahrene Ruheposition und umgekehrt.

14. Maschine nach Anspruch 13, wobei in der Ausrichtung:
- sich das oder mindestens ein Platzierungselement (30e) in der ausgefahrenen Platzierungsposition seitlich über eine Gehäuseaußenfläche (30b; 30c, 30d) hinaus erstreckt, die sich aufrecht über dem Platzierungselement (30e) erstreckt, wie über die Gehäuseaußenfläche (30b; 30c, 30d) hinaus um eine horizontale Distanz von mindestens 3 mm, wie in dem Bereich von 5 bis 25 mm, z. B. 10 bis 15 mm; und/oder
- eine derartige Maschine (1) aufweist:
- eine Gesamthöhe, die sich von einem unteren Ende (30') des ausgefahrenen Platzierungselements (30e) bis zu einem oberen Ende einer derartigen Maschine (1) erstreckt; und
- einen Gesamtabstand, der eine Gehäuseaußenfläche (30b; 30c), die sich aufrecht über dem Platzierungselement (30e) erstreckt, und eine zugewandte Gehäuseaußenfläche (30b; 30d) beabstandet,
derart, dass ein Verhältnis von Gesamthöhe/-abstand mindestens 1,3, wie mindestens 1,5, zum Beispiel mindestens 2, beispielsweise mindestens 2,5, z. B. mindestens 3 beträgt; und/oder
- das Außengehäuse (30) eine untere Außenfläche (30a') neben dem oder mindestens einem Platzierungselement (30e) aufweist, wobei die untere Außenfläche eine im Allgemeinen konvexe, bikonvexe, multikonvexe oder nach unten verjüngte Form aufweist, wie eine im Allgemeinen abgerundete Form, z. B. eine zylindrische, kugelförmige, ellipsoide, eiförmige oder konische Form, und/oder eine im Allgemeinen polyedrische Form, z. B. eine prismatische oder pyramidenförmige Form.

15. Maschine nach einem der vorstehenden Ansprüche, wobei die Maschine ein oder mehrere ortsfeste Platzierungselemente (30f) zum Platzieren einer derartigen Maschine (1), wie eines oder des Moduls (3) einer derartigen Maschine (1), auf einer im Allgemeinen flachen äußeren Trägeroberfläche (5) aufweist, optional wobei die Maschine ein ortsfestes Platzierungselement (30f) aufweist, das aufrecht unterhalb einer derartigen Maschine (1) in einer Ausrichtung zum Zubereiten und Ausgeben des Getränks hervorsteht.

## Revendications

1. Machine (1) permettant de préparer et de distribuer une boisson telle que du thé, du café, du chocolat chaud, du chocolat froid, du lait, de la soupe ou un aliment pour bébé, une telle machine (1) comprenant :
- un boîtier extérieur (30) ayant une ou plusieurs faces extérieures (30a, 30b, 30c, 30d), telles qu'une ou plusieurs faces sont choisies parmi une face supérieure (30a), une face latérale (30b), une face arrière (30c) et une face avant (30d) ; et
- une tête de distribution (35) qui comprend une unité de traitement d'ingrédients (40) et une sortie de boisson (36), l'unité de traitement (40) ayant un support d'ingrédients formant un siège d'ingrédients (45), par exemple, un siège dans lequel des ingrédients sont mélangés, la tête de distribution (35) étant mobile :
- vers l'extérieur du boîtier extérieur (30) dans une position opérationnelle déployée dans laquelle une boisson peut être distribuée par l'intermédiaire de la sortie (36) vers une surface de distribution de boisson (5, 37) pour positionner une tasse ou un gobelet de l'utilisateur (4) ; et
- vers l'intérieur du boîtier extérieur (30) dans une position de stockage rétractée, éventuellement, une position de stockage dans laquelle la sortie (36) est confinée à l'intérieur du boîtier extérieur (30) et/ou dans laquelle la tête de distribution (35) est entourée par des faces extérieures du boîtier extérieur (30) qui sont généralement au même niveau que des faces apparentes de la tête de distribution (35) ;
et
- un circuit de liquide pour traiter ladite boisson et délivrer une telle boisson dans la sortie de boisson (36), le circuit de liquide comprenant au moins une unité pouvant être activée (40,51,52) qui est traversée par un liquide pendant une préparation de boisson, telle qu'une unité pouvant être activée est choisie parmi : un élément d'entraînement de liquide (51) ; un conditionneur thermique (52) ; et l'unité de traitement d'ingrédients (40), éventuellement le circuit de liquide, comprenant un ou plusieurs conduits de liquide (53) pour guider un liquide à délivrer par la sortie (36),
la tête de distribution (35) étant conçue de manière à pouvoir être maintenue dans :
- la position opérationnelle déployée, selon que ladite ou lesdites unités pouvant être activées (40, 51, 52) soient activées ou maintenues activées ou désactivées ou maintenues désactivées ; et/ou
- la position de stockage rétractée, selon que ladite ou lesdites unités pouvant être activées (40, 51, 52) soient activées ou maintenues activées ou désactivées ou maintenues désactivées.

2. Machine selon la revendication 1, dans laquelle la tête de distribution (35) est conçue pour être mobile :
- manuellement par un utilisateur de la position opérationnelle déployée à la position de stockage rétractée et/ou vice versa, éventuellement, une telle machine (1) ayant une unité d'alimentation (54') comprenant un commutateur principal (54) qui est directement ou indirectement actionné par la tête de distribution lorsqu'elle est déplacée entre la position opérationnelle déployée et la position de stockage rétractée ; et/ou
- automatiquement, par exemple, par un moteur et/ou un ressort de rappel automatique, de la position opérationnelle déployée à la position de stockage rétractée et/ou vice versa, éventuellement, la tête de distribution (35) étant déplacée dans sa position opérationnelle déployée lorsqu'une telle machine (1) est alimentée et/ou est déplacée dans sa position de stockage rétractée lorsque l'alimentation d'une telle machine (1) est interrompue.

3. Machine selon la revendication 1 ou 2, dans laquelle la tête de distribution (35) est maintenue dans sa position opérationnelle déployée et/ou dans sa position de stockage rétractée par au moins l'un parmi : une force de friction et/ou magnétique, un dispositif d'attache et un dispositif de verrouillage (30', 35').

4. Machine selon l'une quelconque revendication précédente, dans laquelle la tête de distribution (35) est guidée de sa position opérationnelle déployée à sa position de stockage rétractée et vice versa par un dispositif de basculeur (31a, 31c) et de came (31b, 31d).

5. Machine selon l'une quelconque revendication précédente, dans laquelle l'unité de traitement d'ingrédients (40) a un premier module (41) et un second module (42) qui sont mobiles l'un par rapport à l'autre par un actionneur entre :
- une configuration éloignée pour insérer dans le siège (45) et/ou retirer du siège (45), par exemple, vers un collecteur d'ingrédients usagés (46), un ingrédient, par exemple, un ingrédient aromatique fourni dans une capsule (6) dans le siège (45), par exemple par l'intermédiaire d'un canal d'alimentation en ingrédients (47) ; et
- une configuration rapprochée pour le traitement de l'ingrédient dans le siège (45),
un tel actionneur comprenant au moins l'un parmi :
- un actionneur automatique, par exemple, un moteur tel qu'un moteur électrique ;
- un actionneur semi-automatique, par exemple, un dispositif à ressort de rappel, pour ramener automatiquement le premier et le second module soit dans leur configuration éloignée, soit dans leur configuration rapprochée ; et
- une poignée utilisateur (43), telle qu'une poignée (43) qui est reliée à au moins l'un parmi le premier et le second module (41, 42) et qui actionne ledit au moins l'un parmi les modules (41, 42) en déplaçant la poignée (43) d'une première position à une seconde position, éventuellement, la poignée (43) dans au moins l'une parmi sa première et sa seconde position étant au même niveau qu'au moins l'un parmi le boîtier extérieur (30) et un dispositif d'interface utilisateur (31),
éventuellement, un tel actionneur est relié à au moins l'un parmi le premier et le second module (41, 42) par une transmission qui comprend au moins l'une parmi une transmission par courroie, une transmission par engrenage, par exemple, une transmission par engrenage denté, et une transmission par levier (431, 432, 433, 434).

6. Machine selon l'une quelconque revendication précédente, dans laquelle ladite surface de distribution (5, 37) est formée par :
- un support de placement externe (5) pour placer une telle machine (1) en position de préparation et de distribution de ladite boisson ; et/ou
- un dispositif de support d'utilisateur-receveur (37) d'une telle machine (1), éventuellement, le dispositif de support d'utilisateur-receveur (37) étant amovible sous la sortie (36), tel que pouvant être séparé d'un module (3) d'une telle machine (1) et pouvant être stocké dans un siège de stockage (38) d'un tel module (3), par exemple, pouvant être stocké dans le siège de stockage (38) et fixé dans celui-ci par au moins l'un parmi : une force de friction et/ou magnétique entre le siège (38) et le dispositif de support (37) ; en attachant ou en verrouillant le dispositif de support (37) dans le siège (38) ; et en recouvrant le siège (38) par au moins l'un parmi une porte, une grille, un couvercle de boîtier (30'), par exemple, une demi-coque de type cocon, une poignée de transport (30") et une courroie (30").

7. Machine selon l'une quelconque revendication précédente, qui comprend un dispositif d'interface utilisateur (31), par exemple, connecté à une unité de commande (55) d'une telle machine (1), mobile depuis :
- une position opérationnelle déployée adjacente à une face extérieure (30a) de ladite ou desdites faces extérieures (30a, 30b, 30c) du boîtier extérieur (30) de sorte que le dispositif (31) est accessible par un utilisateur pour faire fonctionner une telle machine (1) afin de préparer et de distribuer ladite boisson ; jusqu'à
- une position de stockage rétractée dans le boîtier extérieur (30) de sorte que le dispositif (31) est inaccessible à un utilisateur pour faire fonctionner une telle machine (1) ; et/ou vice versa,
éventuellement, le dispositif (31) :
- portant un ou plusieurs éléments tactiles, tels qu'un ou plusieurs boutons (32), un pavé tactile ou un écran tactile, et/ou un ou plusieurs indicateurs utilisateur, tels qu'un moyen lumineux, par exemple une DEL ou un écran de signalisation ; et/ou
- ayant, dans sa position opérationnelle déployée, une face extérieure principale (33) qui est généralement au même niveau que la face extérieure de boîtier (30a) qui est adjacente au dispositif d'interface utilisateur (31), éventuellement, la face extérieure principale du dispositif (33) dans la position opérationnelle déployée étant principalement entourée, par exemple, entièrement entourée, par des faces extérieures de boîtier (30a) qui sont au même niveau que la face extérieure principale du dispositif (33).

8. Machine selon l'une quelconque revendication précédente, dans laquelle le dispositif d'interface utilisateur (31) est accouplé à la tête de distribution (35) de manière à être entraîné par la tête (35) ou vice versa entre la position opérationnelle déployée et la position de stockage rétractée, la tête de distribution (35) et le dispositif d'interface utilisateur (31) étant par exemple accouplés ensemble par un dispositif rigide ou articulé, tel qu'un dispositif de basculeur (31c) et de came (35a) ou un élément de liaison mécanique flexible ou par un dispositif de levier.

9. Machine selon la revendication 7 ou 8, dans laquelle le dispositif d'interface utilisateur (31) est mobile, par exemple, manuellement et/ou automatiquement, de sa position opérationnelle déployée à sa position de stockage rétractée et vice versa le long d'une première direction (31') et d'une seconde direction (31") qui n'est pas parallèle à la première direction (31'), éventuellement :
A) les première et seconde directions étant orientées de sorte que :
- la première direction (31') suit un mouvement du dispositif d'interface utilisateur (31) qui s'enfonce généralement dans le boîtier extérieur (30) et en sort, éventuellement, la première direction (31') étant généralement orthogonale à la face extérieure de boîtier (30a) qui est adjacente au dispositif (31) dans sa position opérationnelle ou à un angle par rapport à ladite face extérieure (30a) qui est compris entre 45 et 90 degrés, tel que entre 60 et 90 degrés, par exemple, entre 75 et 90 degrés ; et
- la seconde direction (31") suit un mouvement du dispositif d'interface utilisateur (31) qui se cache derrière et le long de la face de boîtier (30a) qui est adjacente au dispositif d'interface utilisateur (31) dans sa position opérationnelle déployée, éventuellement, la seconde direction (31") étant généralement parallèle à la face extérieure (30a) qui est adjacente au dispositif (31) dans sa position opérationnelle ou à un angle par rapport à ladite face extérieure qui est compris entre 0 et 45 degrés, tel que entre 0 et 30 degrés, par exemple, entre 0 et 15 degrés ;
ou
B) les première et seconde directions étant orientées de sorte que :
- la première direction (31') forme un angle important par rapport à une face extérieure principale (33) du dispositif d'interface utilisateur (31) dans sa position opérationnelle déployée, par exemple, un angle important compris entre 45 et 90 degrés, tel qu'un angle important d'au moins 60 degrés, par exemple un angle important d'au moins 75 ou 85 degrés ; et
- la seconde direction (31") est à un angle réduit par rapport à une face extérieure principale (33) du dispositif d'interface utilisateur (31) dans sa position opérationnelle déployée, par exemple, un angle réduit compris entre 0 et 45 degrés, tel qu'un angle réduit de moins de 30 degrés, par exemple, un angle réduit de moins de 15 ou 5 degrés.

10. Machine selon l'une quelconque des revendications 7 à 9, dans laquelle le dispositif d'interface utilisateur (31) est guidé de sa position opérationnelle déployée à sa position de stockage rétractée et vice versa par un dispositif de basculeur (31a, 31c) et de came (31b, 31d), éventuellement, la came (31b, 31d) du dispositif ayant une première section s'étendant le long de la première direction (31') et une seconde section s'étendant le long de la seconde direction (31"), par exemple, le dispositif d'interface utilisateur (31) étant associé à une paire de cames (31b, 31d) ayant des profils différents, décalés de manière séquentielle, de telle sorte que, lorsque le dispositif d'interface utilisateur (31) est déplacé de la position de fonctionnement à la position de stockage, il a un bord avant (33') qui est abaissé et déplacé sous le boîtier extérieur (30) tandis qu'un bord arrière (33") du dispositif (31), non recouvert par le boîtier extérieur (30), reste au-dessus du bord avant (33") pendant une partie d'un mouvement du dispositif d'interface utilisateur (31) entre la position de fonctionnement et la position de stockage.

11. Machine selon l'une quelconque revendication précédente, qui a un dispositif d'alimentation électrique comprenant un connecteur (56) pour une alimentation électrique externe, telle qu'un cordon électrique et/ou une fiche pouvant être connecté au secteur, et un accumulateur d'énergie interne (57), tel qu'une batterie rechargeable, pour alimenter la préparation et la distribution de ladite boisson lorsque une telle machine (1) n'est pas alimentée par l'intermédiaire dudit connecteur (56), l'accumulateur (57) étant éventuellement chargé par l'intermédiaire du connecteur (56) lorsqu'il est connecté à une alimentation électrique externe.

12. Machine selon l'une quelconque revendication précédente, qui comprend une station d'accueil (2) et un ou ledit module (3) connecté de manière à pouvoir être déconnecté de la station d'accueil (2), la station d'accueil (2) et le module (3) comprenant au moins l'un parmi :
- une alimentation en ingrédients de station (50a) telle qu'un réservoir d'eau et un raccord de liquide de module (50b) pouvant être raccordés à l'alimentation en ingrédients de station (50a) ; et
- un connecteur de station (56) vers une alimentation électrique externe, telle qu'un cordon électrique de station et/ou une fiche pouvant être connecté au secteur, et un connecteur de module (58), par exemple, un connecteur rigide fixe dans le module (3), pouvant être connecté au connecteur de station (56), par exemple, un connecteur rigide fixe dans la station (2),
le module (3) comprenant un dispositif de préparation et de distribution de ladite boisson, par exemple le module comprenant la sortie de boisson (36) et le circuit de liquide qui comprend au moins l'un parmi :
- un dispositif d'alimentation en liquide (50), tel qu'un réservoir principal (50) pouvant être raccordé de manière à pouvoir être désaccouplé par un raccord de liquide (50b) à la station d'accueil (2), par exemple, à un réservoir principal (50) et/ou à une conduite d'alimentation en liquide de la station d'accueil (2) ;
- le dispositif d'entraînement de liquide (51), tel qu'une pompe électrique, par exemple, une pompe à solénoïde, une pompe rotative, une pompe à membrane, une pompe volumétrique ou une pompe péristaltique, pour entraîner un liquide vers la sortie (36) ;
- le conditionneur thermique (52), tel qu'un chauffe-liquide et/ou un refroidisseur de liquide, pour conditionner de manière thermique un liquide délivré par la sortie (36) ; et
- ledit ou lesdits conduits de liquide (53) pour guider un liquide à délivrer par la sortie (36),
éventuellement, le module (3) comprenant au moins l'un parmi :
- une alimentation électrique interne (57), telle qu'une batterie rechargeable ;
- un connecteur pour une alimentation électrique externe (56), tel qu'un cordon électrique de module et/ou une fiche pouvant être connecté au secteur ; et
- une ou ladite unité de commande (55) pour commander le module (3) et éventuellement des fonctions contenues dans la station d'accueil ; et
- le dispositif d'interface utilisateur (31) qui est éventuellement connecté, lorsqu'il est présent, à l'unité de commande (55).

13. Machine selon l'une quelconque revendication précédente, qui comprend un ou plusieurs organes de placement mobiles (30e) pour placer une telle machine (1), telle qu'un ou ledit module (3) d'une telle machine (1), sur une surface de support externe généralement plate (5) dans une orientation permettant de préparer ladite boisson dans le circuit de liquide et de délivrer une telle boisson par l'intermédiaire de la sortie de boisson (36) à la surface de distribution de boisson (5, 37), ledit ou lesdits organes de placement mobiles (30e) ayant :
- une position de placement déployée pour augmenter une stabilité et/ou placer en toute sécurité une telle machine (1), par exemple, un tel module (3), sur ladite surface de support externe (5) dans une orientation permettant de préparer et de distribuer une telle boisson, éventuellement, le ou les organes de placement (30e) dans la position de placement déployée s'étendant à l'écart du boîtier extérieur (30) et/ou s'étendant de manière latérale au-delà d'au moins l'une parmi ladite face latérale (30b), ladite face arrière (30c) et ladite face avant (30d) ; et
- une position de repos rétractée à l'intérieur du boîtier extérieur (30) ou repliée contre le boîtier extérieur (30), par exemple, repliée contre le boîtier extérieur (30) et s'étendant le long de celui-ci, pour :
- réduire une taille d'une telle machine (1), par exemple, un ou ledit module (3) d'une telle machine (1), pour la déplacer ; et/ou
- fournir une configuration permettant de placer ledit module (3) sur une ou ladite station d'accueil (2) d'une telle machine (1) et de relier le module (3) à la station d'accueil (2),
éventuellement, le ou les organes de placement (30e) étant montés pivotants et/ou en translation par rapport au boîtier extérieur (30), pour déplacer le ou les organes de placement de la position de placement déployée à la position de repos rétractée et vice versa.

14. Machine selon la revendication 13, dans laquelle, dans ladite orientation :
- le ou au moins un organe de placement (30e) dans la position de placement déployée s'étend de manière latérale au-delà d'une face extérieure du boîtier (30b ; 30c, 30d) qui s'étend de manière verticale au-dessus dudit organe de placement (30e), par exemple, au-delà de ladite face extérieure de boîtier (30b ; 30c, 30d) d'une distance horizontale d'au moins 3 mm, telle que comprise entre 5 et 25 mm, par exemple, entre 10 et 15 mm ; et/ou
- une telle machine (1) a :
- une hauteur totale s'étendant d'une extrémité inférieure (30') de l'organe de placement déployé (30e) à une extrémité supérieure d'une telle machine (1) ; et
- une distance totale séparant une face extérieure de boîtier (30b ; 30c) s'étendant de manière verticale au-dessus de l'organe de placement (30e) et une face extérieure de boîtier (30b ; 30d).
de telle sorte qu'un rapport entre la hauteur totale et la distance totale est d'au moins 1,3, tel qu'au moins 1,5, par exemple d'au moins 2, par exemple de 2,5, par exemple d'au moins 3 ; et/ou
- le boîtier extérieur (30) a une face extérieure inférieure (30a') adjacente à l'organe de placement ou à au moins un organe de placement (30e), la face extérieure inférieure ayant une forme généralement convexe, biconvexe, multiconvexe ou effilée vers le bas, telle qu'une forme généralement arrondie, par exemple cylindrique, sphérique, ellipsoïdale, ovoïdale ou conique, et/ou telle qu'une forme généralement polyédrique, par exemple prismatique ou pyramidale.

15. Machine selon l'une quelconque revendication précédente, dans laquelle la machine a un ou plusieurs organes de placement fixes (30f) pour placer une telle machine (1), telle qu'un ou ledit module (3) d'une telle machine (1), sur une surface de support externe généralement plate (5), éventuellement, la machine a un organe de placement fixe (30f) faisant saillie de manière verticale sous une telle machine (1) dans une orientation permettant de préparer et de distribuer ladite boisson.
